Europäisches Patentamt

European Patent Office

Office européen des brevets

(11) Veröffentlichungsnummer: **0 069 336**
**A2**

## (12) EUROPÄISCHE PATENTANMELDUNG

(21) Anmeldenummer: 82105824.5

(22) Anmeldetag: 30.06.82

(51) Int. Cl.³: **B 01 D 33/06**

(30) Priorität: 04.07.81 DE 3126438

(43) Veröffentlichungstag der Anmeldung:
12.01.83 Patentblatt 83/2

(84) Benannte Vertragsstaaten:
AT BE CH DE FR GB IT LI LU NL SE

(71) Anmelder: Mecapec S.A.
Postfach
CH-8716 Schmerikon(CH)

(72) Erfinder: Fässler, Kurt
Münsterstrasse 12
CH-8716 Schmerikon(CH)

(72) Erfinder: Dudli, Andreas
Ottenhofenstrasse
CH-8731 Uetliburg(CH)

(72) Erfinder: Fuchs, Ernst
Oberseestrasse
CH-8716 Schmerikon(CH)

(74) Vertreter: Rottmann, Maximilian
Hug Interlizenz AG alte Zürcherstrasse 49
CH-8903 Birmensdorf/ZH(CH)

(54) Abwasser-Trommelfilter.

(57) Bei Abwasser-Trommelfiltern mit vorzugsweise rotierendem, hohlzylindrischem Filterkörper (FK1) besteh das Problem, den Raumausnutzungsgrad des Filtriereffektes zu verbessern und die mechanische Beanspruchung der über den Trommelumfang gespannten Filterschicht zu vermindern.

Zur Lösung wird eine Mehrzahl von hohlzylindrischen Filterkörpern FK1 mit parallelen oder fluchtenden Zylinderachsen (X) innerhalb eines gemeinsamen Abwasserbehälters (AH) angeordnet. Dies erlaubt eine gedrängte Anordnung der für sich mit vergleichsweise geringen Abmessungen ausgebildeten Filterkörper und damit eine hohe Gesamt-Filterfläche, bezogen auf den Raumbedarf eine Mehrfach-Filtereinheit.

EP 0 069 336 A2

./...

Fig 1

0069336

T 8 15

Abwasser-Trommelfilter

Die Erfindung bezieht sich auf ein Abwasser-Trommelfilter mit
mindestens einem wenigstens annähernd hohlzylindrischen, vorzugsweise drehbar gelagerten und mit einem Drehantrieb gekuppelten Filterkörper, der mit seiner Aussenfläche teil- und/oder
zeitweise unterhalb eines Abwasserspiegels angeordnet und dessen
Innenraum an ein Filtratwasser-Abflusssystem angeschlossen ist,
wobei eine Mehrzahl von Filterkörpern mit zueinander wenigstens
annähernd parallel verlaufenden und/oder fluchtenden Zylinderachsen in einem gemeinsamen Abwasserbehälter angeordnet ist.

Ein Trommelfilter der vorgenannten Art für allgemeine Zwecke
der Flüssigkeitsfilterung ist bekannt aus der FR-PS 1.114.915.
Bei dieser sogenannten Planeten-Filterbauart besteht eine
Filtereinheit aus einer Mehrzahl von hohlzylindrischen Filterkörpern von vergleichsweise geringem Durchmesser und grösserer
Länge, die - um eine gemeinsame Achse und/oder je um ihre
eigene Achse drehbar - in einem Abwasserbehälter angeordnet
sowie mit Drehantrieb versehen sind. Diese Merkmale haben zur
Folge, dass zwar die auf den Raumbedarf bezogene, wirksame
Filterfläche einer solchen Filtereinrichtung vergleichsweise
grosse Wert annimmt, wobei sich jedoch die Reinigung der Filterflächen infolge der verschachtelten Zylinderanordnung kompliziert und aufwendig gestaltet.

Aufgabe der Erfindung ist daher die Schaffung eines Abwasser-Trommelfilters, der Planeten-Bauart, das sich durch vergleichsweise einfache und rasch - also mit nur kurzzeitiger Betriebs-unterbrechung - durchführbare Reinigungsmöglichkeit der Filter-flächen auszeichnet. Die erfindungsgemässe Lösung dieser Aufgabe sieht bei einem Abwasser-Trommelfilter der eingangs erwähnten Art vor, dass mindestens eine mit der Aussenfläche der Filterkörper in Wirkverbindung stehende oder setzbare Absaugeinrichtung für auf den Filterflächen abgesetzte Feststoffe vorgesehen ist.

Absaugeinrichtungen sind an sich für Einzel-Trommelfilter bekannt (siehe die US-PS 4 090 965). Im Zusammenhang mit den Gegebenheiten einer Mehrfach-Filteranordnung ergeben sich jedoch besonders vorteilhafte Effekte durch Kombination einer hohen räumlichen Filterflächendichte einerseits mit einer laufenden Entfernung der entsprechend stark anfallenden Feststoffe infolge der laufenden oder periodisch aktivierten Absaugung andererseits.

Im übrigen treten bei der Feststoffabsaugung innerhalb einer Mehrfach-Filteranordnung der vorliegenden Art besondere Probleme hinsichtlich der gleichmässigen Erfassung der verschiedenen Filterflächen auf, die je nach Anordnungsweise eine unterschiedliche Lage innerhalb der Gesamtanordnung aufweisen. In diesem Zusammenhang erweist sich die achssymetrische Mehrfach-Trommelanordnung mit Einzel- und Gesamtrotation als besonders vorteilhaft. Im Interesse eines einfachen Aufbaues kann nämlich grundsätzlich mit nur einer einzigen Absaugeinrichtung gearbeitet
werden, beispielsweise in Form einer sich über die Zylinderlänge
erstreckenden Flachdüse mit Sauganschluss, wobei diese einzige
Absaugeinrichtung einerseits durch die Einzelrotation der
Filterkörper deren Aussenfläche während jeweils einer Umdrehungsphase der Gesamtanordnung intensiv reinigt, während
andererseits durch taktförmige oder auch kontinuierliche Gesamtrotation nacheinander alle Filterkörper dem gleichen Reinigungsprozess unterzogen werden.

Grundsätzlich können erfindungsgemäss auch andersartige Absaugeinrichtungen für eine Mehrfach-Filteranordnung mit Vorteil
zur Anwendung kommen. Eine besondere Weiterbildung der Erfindung sieht demgemäss eine Absaugeinrichtung mit mindestens
einer den Umfang eines hohlzylindrischen Filterkörpers ganz-
oder teilweise umfassenden und in Axialrichtung des Filterkörpers verfahrbaren Saugdüse vor. Eine solche, vorzugsweise
ringförmige Saugdüse ist insbesondere auch bei nichtrotierenden
Filterkörpern anwendbar und in der Lage, die gesamte Filteraussenfläche wirksam von abesetztem Feststoff zu reinigen.
Diese Ausführung einer Absaugeinrichtung kann im übrigen
nicht nur bei Mehrfach-Filteranordnungen der vorliegenden
Art, sonder mit Vorteil auch bei Einzelfiltern an sich üblicher
Art angewendet werden.

- 4 -

0069336

Ferner erweist es sich als besonders wirksam, bei einer
Mehrfach-Filteranordnung der vorliegenden Art eine auf die
Filteraussenfläche einwirkende Spülvorrichtung vorzusehen.
Damit lässt sich, und zwar insbesondere bei kombinierter Anwendung mit einer Absaugeinrichtung, ein stark intensivierter
Filtratdurchsatz und eine beträchtliche Verlängerung der
wartungsfreien Betriebsdauer erzielen.

Endlich wird die Reinigung und Wartung sowie gegebenenfalls
die Instandsetzung von rotierenden Filterkörpern, insbesondere
von solchen in Planeten-Bauart, durch besonders einfache und
montagegünstige Befestigungs- und Spannmittel für die den
Trommelumfang umgebenden, im allgemeinen tuchförmigen Filterschichten erleichtert. Eine hierauf gerichtete Weiterbildung
der Erfindung, die wiederum gegebenenfalls mit Vorteil auch
für andersartige filter verwendbar ist, sieht für die in
Form einer Bespannung vorhandene Filterschicht mindestens eine
in Trommelumfangsrichtung wirkende Spannvorrichtung vor, die
wenigstens ein längs einer Zylinder-Mantellinie an der Bespannung angreifendes und in Radialrichtung zum Trommelinneren hin
wirkendes Spannglied aufweist, wobei dieses Spannglied in einer
sich ganz oder teilweise über die Trommelmenge erstreckenden
Ausnehmung des hohlzylindrischen Tragkörpers angeordnet ist. Eine solche Spannvorrichtung ergibt den wesentlichen Vorteil, dass keine Konstruktionselemente über den Trommelumfang vorstehen, während andererseits eine zuverlässige Spannungshaltung und da- mit Formsteifigkeit der Filterfläche auch über lange Betriebszeiten gewährleistet ist.

Weitere Merkmale und Vorteile der Erfindung werden anhand der in den Zeichnungen schematisch dargestellten Ausführungsbeispiele erläutert. Hierin zeigt:

Fig. 1   Einen Querschnitt einer rotierenden, Mehrfach-Filteranordnung, gemäss Schnittebene II-II in Fig. 2,

Fig. 2   einen Axialschnitt der Filteranordnung nach Fig. 1,

Fig. 3   eine schematische Axialansicht einer andersartigen Mehrfach-Filteranordnung mit lediglich einzeln rotierenden Filtertrommeln,

Fig. 4   einen Teil-Axialschnitt der Filteranordnung nach Fig. 3, gemäss Schnittebene IV-IV,

Fig. 5   eine abgewandelte Filteranordnung mit feststehenden, hohlzylindrischen Filterkörpern und einer Absaugeinrichtung im Querschnitt zu den Zylinderachsen,

Fig. 6   einen Teil-Axialschnitt der Filteranordnung nach Fig. 5, gemäss Schnittebene VI-VI,

Fig. 7    einen Teil-Radialschnitt aus dem Umfangsbereich einer Filtertrommel mit einer ersten Ausführung einer erfindungsgemässen Filterschicht-Spannvorrichtung,

Fig. 8    eine abgewandelte Ausführung einer Spannvorrichtung in einer Schnittdarstellung entsprechend Fig. 7 und

Fig. 9    eine Einzeldarstellung einer Spannvorrichtung entsprechend

         der Ausführung nach Fig. 8 im Radialschnitt und in grösserem Massstab.

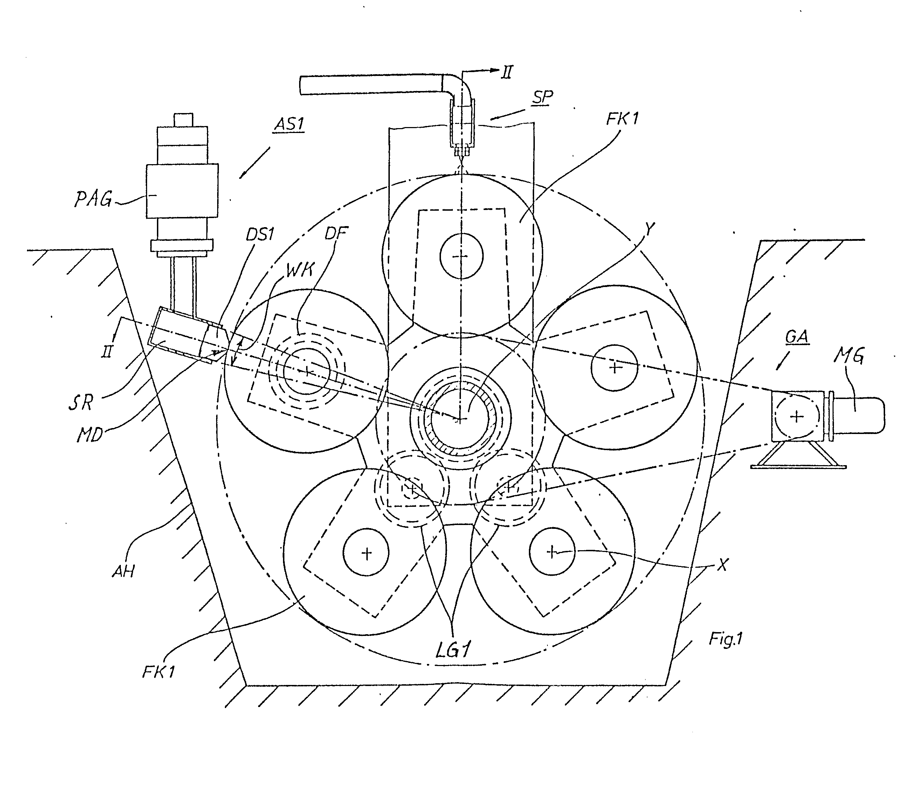

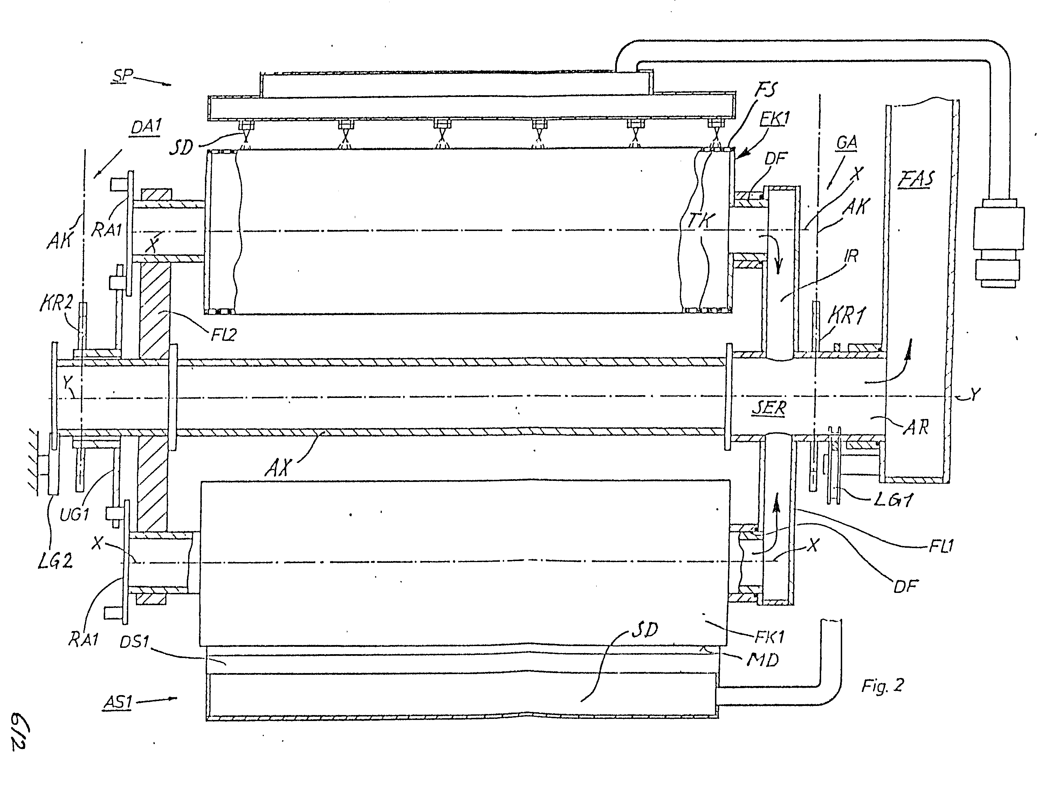

Das in Fig. 1 und 2 dargestellte Trommelfilter umfasst fünf

hohlzylindrische Filterkörper FK1, die je um ihre Mittelachse X drehbar gelagert sind, und zwar zwischen beiderseitigen, für alle Filterkörper gemeinsamen Flansche FL1 und FL2. Diese Flansche sind an einem Achskörper AX befestigt, der seinerseits an beiden Enden mit Hilfe von Aussen-Stützlagern LG1 und LG2 um seine Mittelachse Y drehbar gelagert ist. Damit kann die gesamte Filteranordnung um die Achse Y rotieren, während die einzelnen Filterkörper FK1 eine überlagerte Drehbewegung um ihre eigenen Achsen X ausführen. Dazu ist ein Gesamt-Drehantrieb GA mit einem auf dem Achskörper AX befestigten Kettenrad KR1 und einer umlaufenden Antriebskette AK als Verbindung mit dem in Fig. 1 angedeuteten Motor-Getriebeaggregat MG vorgesehen. Für den Einzelantrieb der Filterkörper FK1 sind diese mit je einem Rotations-Antriebselement RA1 in Form eines bezüglich

X koaxialen Stirnzapfen-Zahnrades verbunden. Diese Zahnräder stehen gemeinsam im Eingriff mit einem bezüglich Y koaxial auf dem Achskörper AX gelagerten, umlaufenden Uebertragungsglied UG1 in Form eines Stirnzahrades, welches seinerseits mit einem vom Gesamt-Drehantrieb unabhängigen, jedoch für alle Filterkörper gemeinsamen Drehantrieb DA1 gekuppelt ist. Letzterer umfasst ein bezüglich Y koaxiales Kettenrad KR2, welches über eine Antriebskette AK mit einem nicht dargestellten Motor-Getriebeaggregat verbunden ist.

Die gesamte Filteranordnung ist in der aus Fig. 1 ersichtlichen Weise in einem wannenartigen Abwasserbehälter AH angeordnet, in dessen Flüssigkeitsspiegel die Filterkörper beim Umlauf aufeinanderfolgend eintauchen und ganz- oder teilweise im Scheitelbereich der Gesamt-Umlaufbewegung austauchen. Der Filtriervorgang erfolgt demgemäss mit einem radialen Flüssigkeitsdurchtritt von aussen in den Innenraum der hohlzylindrischen Filterkörper FK1.

Die Innenräume der Filterkörper nehmen das durch die Filterschichten FS eintretende Filtratwasser auf und führen dies über eine Sammeleinrichtung SER einem Filtratwasser-Abflusssystem FAS zu. Die Sammeleinrichtung wird im Beispielsfall durch den Innenraum IR des Flansches FL1 und den Innenraum AR des rechten Endabschnitts des Achskörpers AX gebildet. An den Flansch-Innenraum IR sind die Innenräume der Filterkörper mit Hilfe von abgedichteten, gleichzeitig auch als Drehlager wirkenden Durchführungen DF angeschlossen. Die inneren Traghülsen dieser Durchführungen sind hierzu an die innenseitige Stirnfläche des Flansches FL1 angesetzt. Infolge der vergleichsweise langsamen Drehbewegung der Filterkörper um ihre Achse stellen diese Durchführungen kein anfälliges Verschleisselement dar, und auch für die erforderliche Abdichtung kann mit Hilfe von einfachen Dichtungselementen wie O-Ringen gesorgt werden. Andererseits hat die Ausbildung des Flansches als Hohlkörper keinen zusätzlichen Aufwand zur Folge, sodass dessen Ausnutzung für die Filtratwasserabführung daher eine hinsichtlich des Bauaufwandes insoweit optimale Lösung darstellt.

Der Zylindermantel der Filterkörper wird, wie in Figur 2 im Teilschnitt angedeutet, durch einen perforierten, hohlzylindrischen Tragkörper TK gebildet, über dessen Aussenfläche sich die als tuchartige Bespannung ausgebildeten Filterflächen FS erstrecken. An der Aussenfläche dieser Filterschichten setzt sich der aus dem Abwasser entfernte Feststoff an, welcher mit zunehmender Ablagerungsdicke die Wirksamkeit der Filterflächen beeinträchtigt und daher periodisch oder laufend entfernt werden muss. Hierzu ist in der aus Figut 1 ersichtlichen Weise eine Absaugeinrichtung AS1 mit einer leistenartigen, sich in Längsrichtung der Filterkörper erstreckenden Saugdüse DS1 vorgesehen. Diese Saugdüse liegt mit ihrer langgestreckten schlitzförmigen Mündung MD auf der gesamten axialen Länge am Mantel jeweils eines Filterkörpers an und ist mit einem sich ebenfalls über die axiale Trommellänge erstreckenden Saughohlraum SR versehen, der seinerseits an ein Pumpenaggregat PAG angeschlossen ist. Wie aus Figur 1 ersichtlich ist,
besteht diese Anlage zwischen Saugdüse und Trommelumfang jeweils
in einem engen Winkelbereich der Drehstellung der gesamten Filteranordnung bezüglich der Achse Y. Dieser Winkelbereich ist in
Figur 1 mit WK bezeichnet. In den Zwischenbereichen liegt die
Düsenmündung dagegen frei und kann keine Absaugwirkung am Filter
entfalten. Es ergeben sich daher die beiden folgenden Betriebsmöglichkeiten für die Absaugeinrichtung:

Bei gleichmässiger Rotation der Filteranordnung um die Achse Y
und ebensolcher Rotation der einzelnen Filterkörper FK 1 wird
die Drehgeschwindigkeit der Filteranordnung so niedrig gewählt,
dass die Saugdüse über ein ausreichendes Zeitintervall mit jedem Filterkörper in Wirkverbindung tritt. In den Zwischenbereichen
kann das Pumpenaggregat gegebenenfalls abgeschaltet werden, um
Betriebsenergie einzusparen. Wenn auf eine fortwährende Rotation
der Filterkörper um ihre eigenen Achsen aus filtertechnischen
Gründen nicht erforderlich ist, kann übrigens auch der Drehantrieb
der Filterkörper jeweils nur für das Intervall der Wirkverbindung
zwischen Saugdüse und Trommelumfang aktiviert werden. Dies macht
allerdings bei gemeinsamem Drehantrieb eine besondere Kupplung
und Steuervorrichtung oder aber einzeln ansteuerbare Drehantriebe
für die einzelnen Filterkörper erforderlich.

Die zweite Betriebsmöglichkeit besteht darin, die Filteranordnung
jeweils schrittweise um einen Winkel fortzuschalten, welcher dem
Winkelabstand zwischen den Achsen X der Filterkörper bezüglich
der Gesamt-Drehachse Y entspricht. Innerhalb der verschiedenen Wirkstellungen verharrt die Filteranordnung in Ruhe, sodass für die Absaugung optimale Berührungsverhältnisse zwischen Saugdüse und Trommelumfang eingestellt werden können.

Zusätzlich ist bei der Ausführung nach Figur 1 eine Spülvorrichtung SP vorgesehen, die mit in Trommellängsrichtung verteilt angeordneten Spüldüsen SD auf die Aussenfläche der jeweils ausgetauchten Trommel einwirkt. Eine Nachordnung der Spülvorrichtung im Umdrehungssinn bezüglich der Absaugeinrichtung hat zur Folge, dass die durch Saugwirkung gelockerten Feststoffreste in den oberflächennahen Bereichen der Filterschichten durch die Spülflüssigkeit ausgewaschen und damit vollständig entfernt werden.

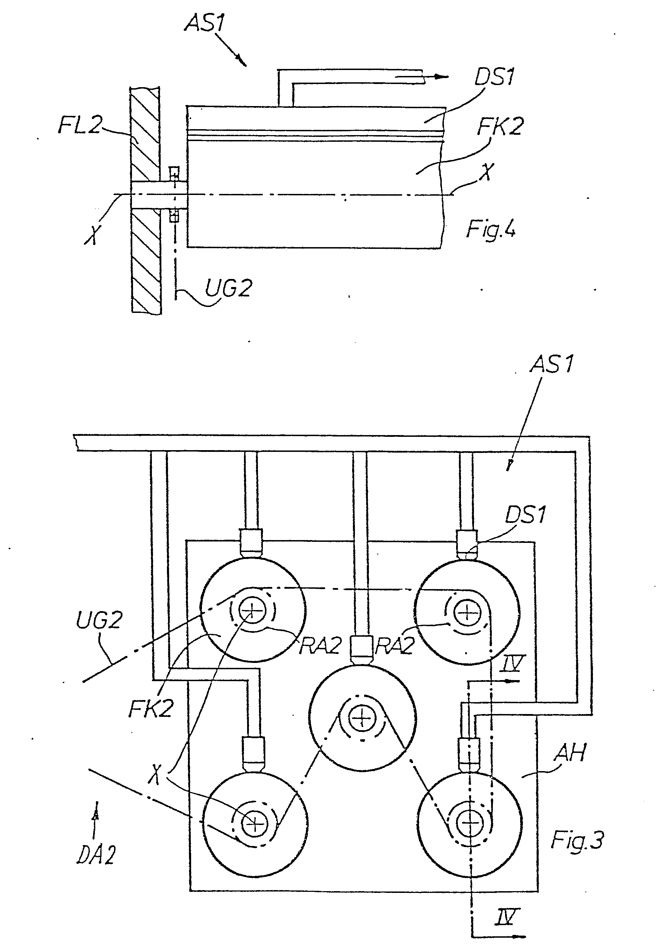

Die Filteranordnung nach Figur 3 und 4 mit je für sich um die Achse X rotierenden, trommelförmigen Filterkörpern FK 2 erlaubt eine vergleichsweise dicht gedrängte räumliche Anordnung dieser Filterkörper, weil auf eine Gesamtdrehung der Filteranordnung verzichtet wird. Gleichzeitig bleibt die vorteilhafte Möglichkeit eines gemeinsamen Drehantriebes DA2 für die Filterkörper gewahrt, und zwar mit Hilfe von Rotations-Antriebselementen RA2 nach Art der Ausführung gemäss Figur 1 und 2, die nun jedoch mit einem gemäss Figur 3 geschlossen umlaufenden Antriebs-Uebertragungsglied UG2 in Form einer Antriebskette im Eingriff stehen. Der Vorteil der räumlich stark gedrängten Filteranordnung ist also mit demjenigen eines einfachen, gemeinsamen Drehantriebes verbunden.

Diesen Vorteilen der Ausführung nach Figur 3 und 4 steht ein erhöhter Bauaufwand für eine Absaugeinrichtung AS1 gegenüber, die an sich entsprechend Figur 1 und 2 ausgebildet ist und ebenfalls die Trommellänge übergreifende Saugdüse DS1 aufweist, jedoch hier für jeden Filterkörper eine eigene Saugdüse benötigt. Im Falle vergleichsweise einfacher Ausbildung der Saugdüsen kann dies je nach den Gegebenheiten des Anwendungsfalles einen durchaus tragbaren Aufwand darstellen.

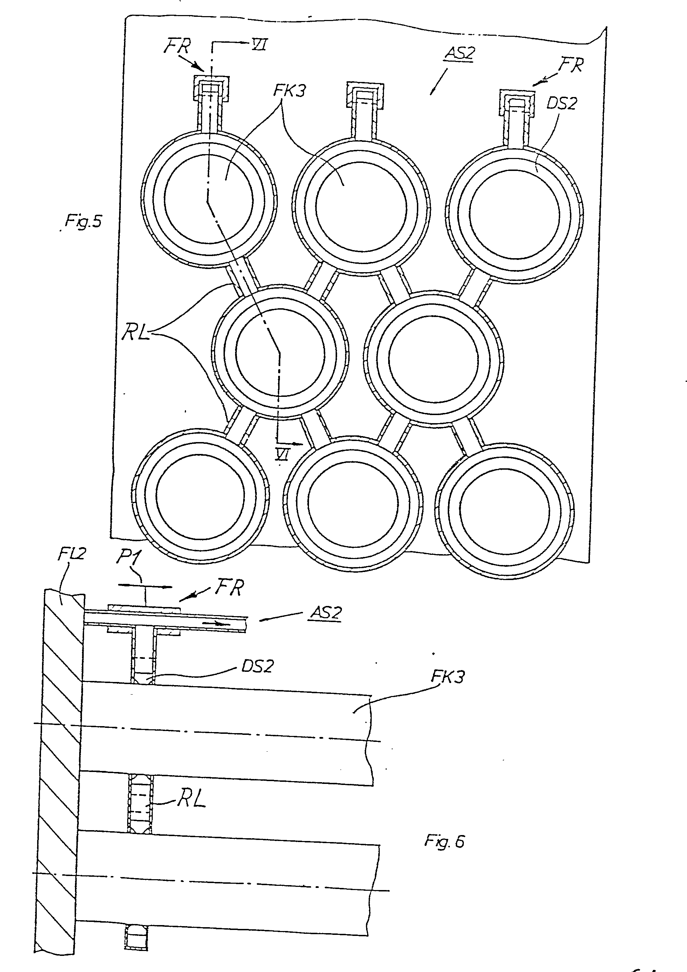

Die Filteranordnung nach Figur 5 und 6 umfasst eine Mehrzahl von nichtrotierenden, hohlzylindrischen Filterkörpern FK3, die ansonsten in der aus Figur 2 ersichtlichen Weise zwischen beiderseitigen Flanschen befestigt und über den Innenraum eines dieser Flansche mit einem Filtratwasser-Abflusssystem verbunden sein können. Die nichtrotierende Anordnung der Filterkörper erlaubt, wie Figur 5 dies veranschaulicht, eine noch stärkere räumliche Zusammendrängung der Filterkörper und damit einen noch höheren Raumausnutzungsgrad. Abgesehen von je nach Anwendungsfall zu beachtenden Einbussen an Filterwirkung infolge der fehlenden Relativbewegung zwischen Filteroberfläche und Abwasser steht dem vorgenannten Vorteil des höheren Raumausnutzungsgrades ein erhöhter Bauaufwand für eine Absaugeinrichtung AS2 gegenüber. Letztere umfasst für jeden Filterkörper eine ringförmige den Umfang des Filterkörpers umgreifende Saugdüse DS2, die bis auf die gekrümmte Ringausbildung der Düsenausführung nach Figur 1 und 2 entsprechen kann. Die gesamte Düsenanordnung ist mit Hilfe von Rohrleitungsabschnitten RL zu einer steifen Baueinheit verbunden, wobei ausserdem die Innenräume der Suagdüse durch diese Rohrleitungen miteinander verbunden sind. Die Saugdüsen-Baueinheit ist an Längsführungen FR in Richtung des Doppelpfeils P1 in Axialrichtung der Filterkörper verfahrbar aufgehängt und mit einem nicht dargestellten, oszillierenden Linearantrieb gekuppelt. Ueber diese Längsführungen ist in der aus Figur 6 ersichtlichen Weise auch der erforderliche Anschluss an eine ebenfalls nicht dargestellte Saugpumpe geschaffen.

Besonders ist darauf hinzuweisen, dass sich eine räumliche gedrängte Filteranordnung gegebenenfalls auch durch axial fluchtende Mehrfahanordnung von Filterkörpern erreichen lässt. Die hierzu erforderliche Aneinanderreihung von hohlzylindrischen Filterkörpern bedarf keiner besonderen zeichnerischen Darstellung.

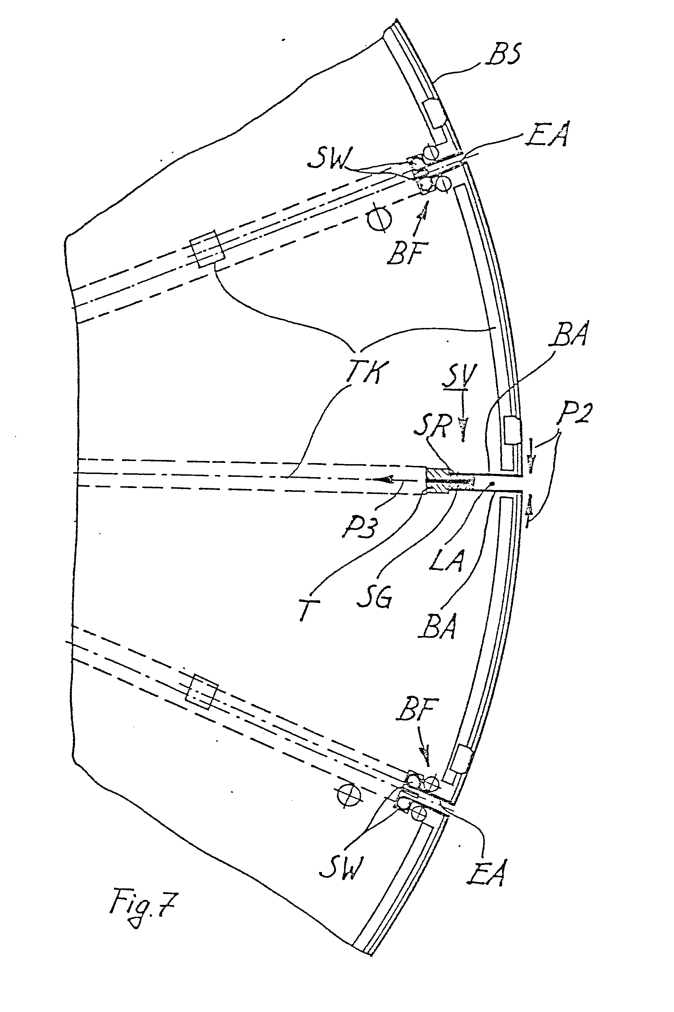

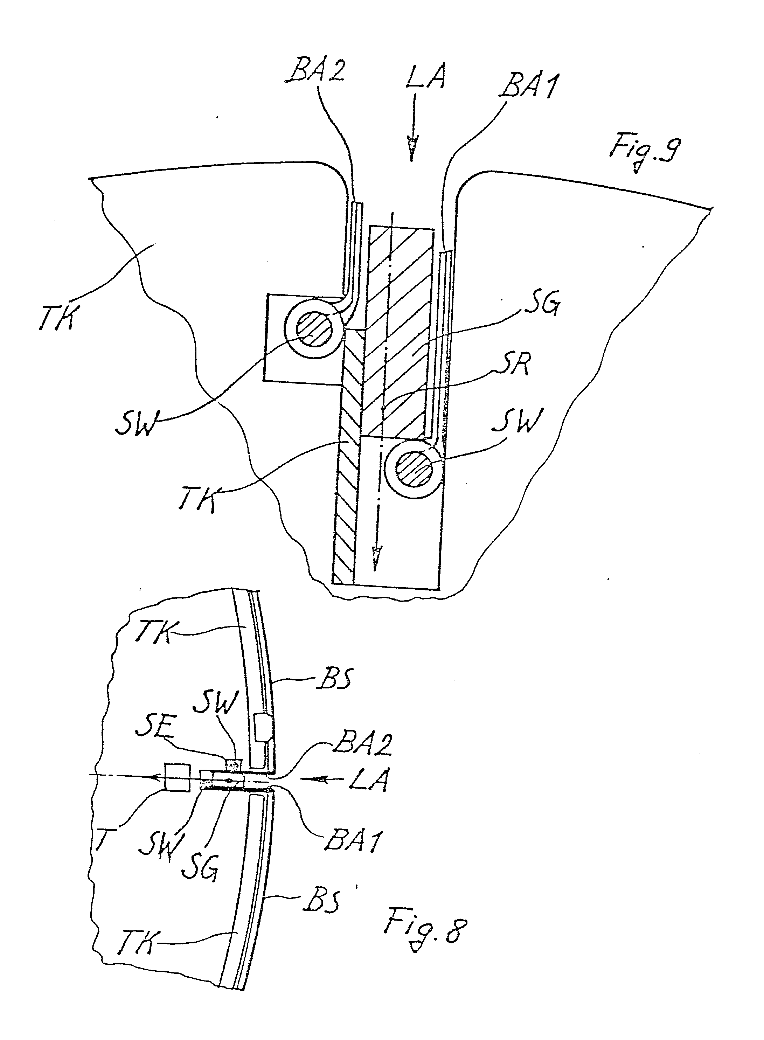

Die Befestigungs- und Spannvorrichtungen für die als tuchförmige Bespannung ausgebildete Filterschicht am Trommelumfang in der Ausführung nach Figur 7 bzw. nach Figur 8 und 9 bewirkt eine Spannung des Filtermaterials gemäss den Pfeilen P2 in Figur 7 und 8.

Bei der Ausführung nach Figur 7 umfasst die Spannvorrichtung ein sich über die Trommellänge erstreckendes, in einer nutförmigen Längsausnehmung LA des Tragkörpers TK angeordnetes, leistenförmiges Spannglied SG, welches in Radialrichtung nach innen an einem durch die nutförmige Längsausnehmung LA geführten Abschnitt BA der Bespannung angreift. Spannschrauben SR durchgreifen das Spannglied SG und sind in nicht näher dargestellter Weise in radiale Gewindebohrungen eines Längsträgers T des Tragkörpers TK eingesetzt. Damit lässt sich die Spannvorrichtung durch die Längsausnehmung LA hindurch bequem von aussen betätigen. An zwei bezüglich der Spannvorrichtung SV beiderseits in Umfangsrichtung versetzt angeordneten Endabschnitten EA der Bespannung sind Befestigungsmittel BF ebenfalls in nutförmigen Längsausnehmungen des Tragkörpers untergebracht. Diese Befestigungsmittel greifen an Spannwulsten SW der Bespannungs-Endabschnitte an, wie dies aus Figur 7 ersichtlich ist.

Bei der Ausführung nach Figur 8 ist für jeweils einen Umfangsabschnitt der Bespannung BS einerseits eine seitliche Ausnehmung SE einer nutförmigen Längsausnehmung LA zur Aufnahme eines Spannwulstes SW und andererseits ein Spannglied SG nach Art von Figur 7 für den radialen Angriff an einem darunterliegenden Spannwulst SW vorgesehen. Demgemäss sind beiderseitige Endabschnitte BA1 und BA2 der Bespannung längs der Flanken der Ausnehmung LA radial nach innen geführt.

Figur 9 lässt den Aufbau dieser Befestigung im einzelnen erkennen. Danach kommt es wesentlich darauf an, dass mittels des Spanngliedes SG ein seitliches Austreten des Spannwulstes am Bespannungs-Endabschnitt BA2 verhindert wird. Es ergibt sich insgesamt eine vielseitig anwendbare, sichere Spannbefestigung von vergleichsweise einfachem Aufbau.

P 8 15
0069336

Patentansprüche

1. Abwasser-Trommelfilter mit mindestens einem wenigstens annähernd hohlzylindrischen, vorzugsweise drehbar gelagerten und mit einem Drehantrieb gekuppelten Filterkörper, der mit seiner Aussenfläche teil- und/oder zeitweise unterhalb eines Abwasserspiegels angeordnet und dessen Innenraum an ein Filtratwasser-Abflusssystem angeschlossen ist, wobei eine Mehrzahl von Filterkörpern (FK1, FK2, FK3) mit zueinander wenigstens annähernd parallel verlaufenden und/oder fluchtenden Zylinderachsen (X) in einem gemeinsamen Abwasserbehälter (AH) angeordnet ist, dadurch gekennzeichnet, dass mindestens eine mit der Aussenfläche der Filterkörper (FK1, FK2) in Wirkverbindung stehende oder setzbare Absaugeinrichtung (AS1, AS2) für auf den Filterflächen abgesetzte Feststoffe vorgesehen ist.

2. Abwasser-Trommelfilter nach Anspruch 1, dadurch gekennzeichnet, dass für eine Mehrzahl von Filterkörpern (FK1) eine gemeinsame, aufeinanderfolgend mit den einzelnen Filterkörpern in Wirkverbindung setzbare Absaugeinrichtung (AS1) vorgesehen ist.

3. Abwasser-Trommelfilter nach Anspruch 2, dadurch gekennzeichnet, dass mindestens eine sich parallel zur Zylinderachse (X) der Filterkörper (FK1) bzw. der Gesamt-Zylinderachse (Y) der Filteranordnung erstreckende Saugdüse (DS1) vorgesehen ist, die bei der Drehung der Filteranordnung aufeinanderfolgend längs Mantellinien mit der Aussenfläche der hohlzylindrischen, um ihre Zylinderachse (X) rotierenden Filterkörper (FK1) in Wirkverbindung tritt.

4. Abwasser-Trommelfilter mit mindestens einem hohlzylindrischen Filterkörper, insbesondere nach einem der Ansprüche 1 bis 3, dadurch gekennzeichnet, dass eine Absaugeinrichtung (AS2) mit mindestens einer den Umfang des hohlzylindrischen Filterkörpers (FK3) wenigstens teilweise umfassenden und in Axialrichtung des Filterkörpers verfahrbaren Saugdüse (DS2) vorgesehen ist.

5. Abwasser-Trommelfilter mit einem hohlzylindrischen Tragkörper für eine den Trommelumfang umgebende, als tuchförmige Bespannung ausgebildete Filterschicht, insbesondere nach einem der vorangehenden Ansprüche, dadurch gekennzeichnet, dass für die Bespannung (BS) mindestens eine in Trommelumfangsrichtung wirkende Spannvorrichtung (SV) vorgesehen ist, die wenigstens ein längs einer Zylinder-Mantellinie an der Bespannung (BS) angreifendes und in Radialrichtung zum Trommelinneren hin wirkendes Spannglied (SG) aufweist, und dass dieses Spannglied (SG) in einer sich wenigstens teilweise über die Trommellänge erstreckende Ausnehmung des hohlzylindrischen Tragkörpers (TK) angeordnet ist.

6. Abwasser-Trommelfilter nach Anspruch 5, dadurch gekennzeichnet, dass die Spannvorrichtung (SV) ein als Druckleiste ausgebildetes Spannglied (SG) sowie an diesem angreifende, über die Trommellänge verteilt angeordnete Spannschrauben (SR) aufweist, und dass dieses Spannglied (SG) an einem in eine nutförmige Längsausnehmung (LA) des Tragkörpers (TK) geführten Abschnitt (BA) der Bespannung (BS) angreift.

7. Abwasser-Trommelfilter nach Anspruch 6, dadurch gekennzeichnet, dass in die nutförmige Längsausnehmung (LA) des Tragkörpers (TK) mindestens ein Bespannungs-Endabschnitt (BA1) mit einem radial unterhalb des Spannglieds (SG) angeordneten Spannwulst (SW) geführt ist.

8. Abwasser-Trommelfilter nach Anspruch 7, dadurch gekennzeichnet, dass ein am Tragkörper (TK) fest verankerter Bespannungs-Endabschnitt (BA2) in eine Seitenausnehmung (SE) der nutförmigen Längsausnehmung (LA) mit einem in Trommellängsrichtung verlaufenden Spannwulst (SW) eingesetzt ist.

Fig.1

0069336

Fig. 2

0069336

AS1

DS1

FL2

FK2

X

X

Fig.4

UG2

AS1

DS1

UG2

RA2 RA2

IV

FK2

AH

X

DA2

IV

Fig.3

613

Fig.5

Fig. 6

6/4

Fig.7

6/6

0069336

Fig.9

Fig.8